# DEMANDE DE BREVET EUROPEEN

(11) **EP 1 278 281 A1**
(43) Date de publication de la demande: **22.01.2003**
(21) Numéro de dépôt: 02356143.4
(22) Date de dépôt: 15.07.2002
(51) Int. Cl.: H02G 1/14, H02G 15/00

(54) **Poche d'injection à moyens de perforation et procédé d'injection de produit divers**

(30) Priorité: 17.07.2001 FR 0109545
(71) Demandeur: Fereal 13, 13640 La Roque d'Antheron (FR)
(72) Inventeur: Mendala, Jacky M., 26000 Valence (FR); Stawicki, Jean-Claude M., 13640 La Roque d'Antheron (FR)
(74) Mandataire: Maureau, Philippe

(57) **Abrégé**

Ce dispositif comprend une poche d'injection qui comprend un corps souple creux (6) équipé d'une tête d'injection (8) pourvue d'au moins un orifice (9) d'éjection ou produit à injecter.

Il comprend en outre des moyens (13) de perforation d'une membrane faisant obstacle à un écoulement du produit à injecter par l'orifice d'éjection.

## Description

L'invention concerne le domaine technique des dispositifs utilisés pour l'injection de résine ainsi que de produits fluides ou pâteux divers dans un réceptacle, une anfractuosité ou analogue.

Dans une application préférée mais non limitative, l'invention concerne les dispositifs utilisés pour l'injection de résine dans des boîtes dites de raccordement ou de jonction utilisées dans le domaine de la distribution d'électricité au moyen de câbles souterrains.

Dans le domaine ci-dessus, le brevet FR-2 553 593 a proposé, pour assurer l'injection d'une résine bi-composant conditionnée en sachet plastique fermé hermétiquement, de mettre en oeuvre une poche d'injection. Selon ce document, la poche d'injection présente un corps souple creux de forme sensiblement tronconique ouvert à une extrémité pour l'introduction du sachet de résine et fermée à l'extrémité opposée par une tête d'injection pourvue d'un orifice d'éjection de la résine.

Ce dispositif est mis en oeuvre de la façon suivante. L'orifice d'éjection de la poche est raccordé à la boîte de jonction dans laquelle la résine doit être injectée. Ensuite, le sachet est, après avoir été malaxé, introduit dans le corps souple qui est alors fermé au niveau de son extrémité d'introduction au moyen d'une clef. La clef est ensuite tournée pour enrouler le corps creux sur lui-même selon une direction perpendiculaire à son axe de symétrie. Cet enroulement contribue à réduire le volume du corps creux de sorte que le sachet vient en appui contre les parois tronconiques et par un effet de coin se bloque sur celles-ci à distance de la tête d'injection. Au fur et à mesure que le corps creux est enroulé sur lui-même, la pression exercée sur le sachet augmente jusqu'à entraîner un éclatement spontané du sachet libérant ainsi la résine qui se trouve alors injectée par l'orifice d'éjection dans la boîte de jonction.

Une fois le sachet complètement vidé de sa résine, l'opérateur déroule la poche souple, retire le sachet et remet un nouveau sachet pour procéder à une nouvelle injection de résine. L'opérateur procèdera ainsi jusqu'à remplissage complet de la boîte de jonction.

Le dispositif d'injection selon le brevet FR-2 553 596 donne entière satisfaction en ce qui concerne sa fonction d'injection de résine.

Toutefois, dans la mesure où le sachet se trouve immobilisé à distance de la tête d'injection, il définit, avec cette dernière, une poche d'air qui se trouve alors entraîné avec la résine injectée. Or, l'air, inclus dans la résine, nuit aux qualités mécanique et électrique de celle-ci. De plus, les bulles d'air incluses dans la résine sont susceptibles de renfermer de l'humidité préjudiciable à la pérennité de la boîte de fonction.

Il apparaît donc le besoin de disposer d'un dispositif d'injection qui permette d'éliminer les risques d'inclusion d'air dans le produit injecté.

Par ailleurs, l'éclatement du sachet de résine entraîne une souillure de toute la partie basse de la poche d'injection ainsi que de l'enveloppe du sachet, de sorte que lors des opérations de retrait et de mise en place successive de sachets dans la poche d'injection, l'opérateur est susceptible de rentrer en contact ou de souiller son environnement avec de la résine.

Il apparaît donc également le besoin de disposer d'un nouveau type de dispositif d'injection qui réduise autant que faire se peut les risques de souillure du sachet ayant été vidé ainsi que de l'environnement de l'opérateur utilisant le dispositif d'injection.

Afin d'atteindre ces objectifs, l'invention concerne un dispositif d'injection d'un produit fluide ou pâteux du type comprenant une poche d'injection qui comprend un corps souple creux équipé d'une tête d'injection pourvue d'au moins un orifice d'éjection de la résine.

Selon l'invention, ce dispositif d'injection est caractérisé en ce qu'il comprend en outre des moyens de perforation d'une membrane faisant obstacle à un écoulement du produit à injecter par l'orifice d'éjection.

Le produit fluide ou pâteux à injecter peut être directement conditionné dans la poche d'injection qui se trouve alors hermétiquement fermée de manière à empêcher tout écoulement du fluide du produit à injecter. La membrane, faisant obstacle à l'écoulement du fluide, forme alors un opercule d'obturation de l'orifice d'éjection. Un tel dispositif d'injection peut ainsi être constitué d'un sachet étanche, formant le corps souple et contenant le produit à injecter, sur lequel est adapté une tête d'injection.

Toutefois, selon l'invention, le produit à injecter peut aussi être conditionné indépendamment du dispositif d'injection, dans un sachet souple par exemple. Dans ce cas, le dispositif d'injection est alors de préférence réalisé de manière que le corps de la poche d'injection présente une forme allongée et comporte, à une extrémité, la tête d'injection, et à l'extrémité opposée, une ouverture pour l'introduction du sachet contenant le produit à injecter.

Il doit être remarqué que, dans ce cas, la membrane, faisant obstacle à l'écoulement du produit à injecter par l'orifice d'éjection du dispositif, est formée par l'enveloppe du sachet contenant le produit à injecter.

Selon une forme de réalisation de l'invention, le corps de la poche d'injection présente une forme sensiblement cylindrique de révolution. Toutefois, conformément à l'invention, le corps de la poche d'injection pourrait présenter une forme cylindrique au sens général du terme, la section droite transversale du corps ne présentant pas alors une forme de cercle. De même, le corps de la poche d'injection pourrait présenter une forme tronconique dans la mesure où la convergence de la paroi du corps ne fait pas obstacle à un engagement complet du sachet dans la poche d'injection et ne peut entraîner un blocage du sachet à distance de la tête d'injection.

Afin de favoriser l'écoulement de la résine, la paroi interne de la tête d'injection converge vers l'orifice d'éjection. Bien entendu, cette convergence n'est pas strictement nécessaire et la paroi interne de la tête d'injection pourrait être plate.

Les moyens de perforation du sachet peuvent être réalisés de toute façon appropriée.

Ainsi, selon une caractéristique de l'invention, afin d'assurer une perforation optimale du sachet de produit à injecter ainsi qu'un vidage optimal du sachet, les moyens de perforation sont disposés en partie au moins autour de l'orifice d'éjection et définissent au moins un passage d'écoulement de la résine.

Dans le même sens et selon une forme de réalisation préférée, les moyens de perforation sont adaptés pour découper une ouverture dans le sachet contenant la résine tout en laissant subsister au moins un bras de liaison entre la partie découpée du sachet et le reste du sachet. Ainsi, cette disposition avantageuse de l'invention évite que la partie découpée du sachet ne soit entraînée par la résine injectée.

Par ailleurs, afin de garantir une perforation optimale du sachet, les moyens de perforation sont adaptés pour perforer le sachet indépendamment du sens d'enroulement du corps de la poche autour de son axe X-X'.

Selon une autre caractéristique de l'invention, les moyens de perforation comprennent au moins une canule comportant un corps tubulaire définissant un canal d'éjection du produit à injecter. La canule comporte également une extrémité de perforation, de préférence mais non nécessairement, biseautée. Afin d'assurer une parfaite perforation de la membrane faisant obstacle à l'écoulement du produit à injecter, le bord de l'extrémité de perforation de la canule présente, de préférence mais non nécessairement, un chanfrein s'étendant, sur tout ou partie de la périphérie du bord, à partir de la face extérieure du corps de la canule et convergeant vers l'intérieur de la canule ou inversement. Cette disposition de l'invention permet de définir une arête de perforation particulièrement tranchante et efficace.

Selon l'invention, les moyens de perforation peuvent être soit solidaires de la tête d'injection, soit indépendants de cette dernière.

Dans l'éventualité où les moyens de perforation sont solidaires de la tête d'injection, les moyens de perforation peuvent être mobiles par rapport à la paroi de la tête d'injection qui est orientée vers l'intérieur de la poche et qui définit le fond de la poche d'injection, entre une position d'extension ou de perforation dans laquelle les moyens de perforation font saillie par rapport à la paroi interne de la tête d'injection et une position de rétraction dans laquelle les moyens de perforation sont escamotés par rapport à la paroi interne de la tête d'injection.

Cette disposition avantageuse de l'invention permet d'éviter les risques de blessure d'un utilisateur en l'absence de sachet de produit à l'intérieur de la poche d'injection ou lors du retrait du sachet vide.

Selon l'invention; ce mouvement relatif des moyens de perforation par rapport à la paroi de la tête d'injection formant le fond de la poche peut être assuré de différentes façons.

Selon une première forme de réalisation, les moyens de perforation sont portés par un équipage mobile, à l'intérieur de la tête d'injection, asservi en position escamotée des moyens de perforation par un ou plusieurs ressorts. La tête de perforation peut comprendre alors des moyens de blocage pour immobiliser les moyens de perforation, soit en position d'extension, soit en position de rétraction ou escamotée.

Selon une autre forme de réalisation, les moyens de perforation sont fixes par rapport à la tête d'injection dont la paroi interne, orientée vers l'intérieur de la poche, est alors définie par un plateau mobile par rapport aux moyens de perforation. Le plateau est alors mobile entre une position haute, correspondant à la position de rétraction des moyens de perforation, et une position basse, correspondant à la position d'extension des moyens de perforation. De plus, le plateau se trouve asservi par des moyens de rappel élastique en position haute.

Selon une autre forme de réalisation de l'invention, les moyens de perforation sont indépendants de la tête d'injection.

Dans une variante préférée de réalisation, les moyens de perforation comprennent alors un corps tubulaire qui définit un canal d'éjection de la résine et qui est destiné à venir s'insérer dans l'orifice d'éjection de la tête d'injection. Le corps tubulaire peut alors comprendre une canule présentant une extrémité de perforation biseautée.

De manière préférée, le dispositif d'injection comprend également des moyens pour enrouler le corps de la poche sur lui-même. Ces moyens d'enroulement peuvent être constitués soit par une clef amovible, soit être directement intégrés dans le corps souple de la poche au niveau ou à proximité de l'ouverture d'introduction de cette dernière.

Selon une caractéristique préférée de l'invention visant à réduire les coûts de fabrication du dispositif, le corps souple et la tête d'injection forment un ensemble monobloc et sont fabriqués, de préférence mais non nécessairement, d'une seule pièce en matière plastique.

L'invention concerne également un procédé d'injection, dans un réceptacle quelconque d'un produit fluide ou pâteux, conditionné dans un sachet.

De manière générale, le procédé consiste notamment à mettre en oeuvre un dispositif d'injection comprenant :
- une poche d'injection qui comprend un corps creux souple ouvert à une extrémité pour l'introduction du sachet et fermé à l'extrémité opposée par une tête d'injection pourvue d'au moins un orifice d'injection de la résine,
- et des moyens pour enrouler sur lui-même le corps souple de la poche,
le procédé d'injection consiste de plus à :
- placer l'orifice d'éjection en relation avec le réceptacle,
- disposer le sachet dans le corps souple,
- enrouler le corps souple sur lui-même pour éjecter le contenu du sachet contenue dans le sachet par l'orifice d'éjection dans le réceptacle.

Selon l'invention, ce procédé est caractérisé en ce qu'il consiste à :
- mettre en oeuvre un dispositif d'injection comprenant des moyens de perforation du sachet,
- et perforer le sachet placé dans le dispositif d'injection avant d'assurer l'éjection de la résine dans le réceptacle.

Selon une caractéristique de l'invention, le sachet est comprimé dans le corps souple avant de procéder à la perforation du sachet.

Selon une autre caractéristique de l'invention, le corps souple est enroulé ou vrillé autour de son axe longitudinal X-X'. Cette caractéristique avantageuse du procédé permet alors d'obtenir un taux de vidage du sachet particulièrement élevé.

Diverses autres caractéristiques de l'invention ressortent de la description faite ci-dessous en référence aux dessins qui montrent les formes préférées non limitatives de réalisation de l'invention.

La figure 1 est une perspective partiellement arrachée et éclatée montrant un dispositif d'injection selon l'invention ainsi qu'un réceptacle dans lequel l'injection doit intervenir.

La figure 2 est une perspective sensiblement analogue à la figure 1 montrant le dispositif d'injection conforme à l'invention adapté sur un réceptacle juste avant le début de l'injection.

La figure 3 est une coupe selon le plan III-III de la figure 2.

La figure 4 est une coupe analogue à la figure 3 montrant le dispositif conforme à l'invention en cours de la phase d'injection.

La figure 5 est une élévation montrant le dispositif d'injection conforme à l'invention en fin de la phase d'injection.

La figure 6 est une perspective partielle arrachée montrant un détail de réalisation d'une forme préférée du dispositif selon l'invention.

La figure 7 est une vue en perspective analogue à la figure 2 montrant une autre forme de réalisation du dispositif selon l'invention.

Les figures 8 à 10 illustrent une forme de réalisation des moyens de perforation de la poche selon l'invention faisant intervenir une canule biseautée.

Les figures 11 à 14 sont des coupes analogues à la figure 3 montrant différentes phases de mise en oeuvre d'un dispositif d'injection selon l'invention dans lequel les moyens de perforation sont réalisés sous la forme d'un ensemble indépendant de la tête d'injection.

La figure 15 est une coupe axiale d'une autre forme de réalisation du dispositif d'injection selon l'invention avec des moyens de perforation escamotables.

La figure 16 est une coupe selon la ligne XVI-XVI de la figure 15.

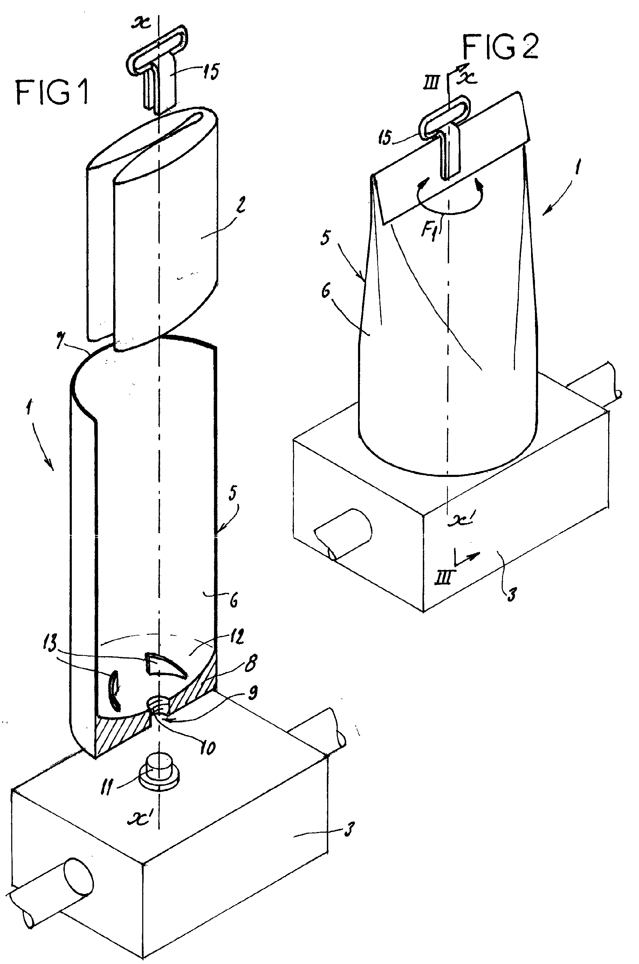

Un dispositif d'injection conforme à l'invention, tel qu'illustré à la figure 1 et désigné dans son ensemble par la référence 1, est destiné à permettre l'injection du contenu d'un sachet de résine 2 dans un réceptacle 3 tel que par exemple une boîte de jonction ou de raccordement pour un réseau électrique souterrain.

Le dispositif d'injection 1 est constitué tout d'abord d'une poche d'injection 5 qui comprend un corps creux souple 6 ouvert à une extrémité 7 pour l'introduction du sachet 2 et fermé à l'extrémité opposée par une tête d'injection 8. Conformément à une caractéristique essentielle de l'invention, le corps souple 6 présente une forme cylindrique d'axe longitudinal X-X'. Selon l'exemple illustré, le corps 6 possède une section droite transversale circulaire et présente donc la forme d'un cylindre de révolution. Toutefois, le corps 6 pourrait posséder une section droite transversale non circulaire telle que par exemple elliptique ou polygonale.

La tête d'injection 8 comprend au moins un et, selon l'exemple illustré, exactement un orifice 9 d'éjection de la résine. De manière préférée, l'orifice 9 est pourvu de moyens 10 de fixation sur une valve d'injection 11 équipant la boîte 3. Les moyens de fixation 10 sont par exemple constitués par un taraudage complémentaire d'un filetage offert par la valve 11. Bien entendu, les moyens de fixation 10 pourraient être réalisés de toute autre manière appropriée.

Afin de permettre une perforation du sachet 2 comme cela apparaîtra par la suite, la tête d'injection 8 présente sur une face interne 12 des moyens de perforation 13 du sachet. Selon l'exemple illustré, les moyens de perforation 13 sont constitués par des dents disposées autour de l'orifice 9.

La poche d'injection 5 peut être réalisée de toute manière appropriée et, selon l'exemple illustré, elle forme un ensemble monobloc résultant de la fabrication en une seule pièce de la tête d'injection 8 et du corps souple 6 en matière plastique injectée.

Bien entendu, la poche d'injection 6 pourrait résulter de l'assemblage d'une pièce formant la tête d'injection 8 et d'un tube souple destiné à former le corps 6. Le tube peut alors être réalisé à partir d'une nappe à base de polyester haute ténacité avec une enduction PVC double face.

Le dispositif d'injection selon l'invention comprenant la poche d'injection 5 est mis en oeuvre de la manière suivante.

Tout d'abord, l'orifice d'éjection 9 est raccordé à la boîte de jonction 3. Ensuite, le sachet 2, après malaxage, est introduit, par un opérateur, dans le corps 6 jusqu'au fond de ce dernier pour être en contact avec les dents de perforation 13.

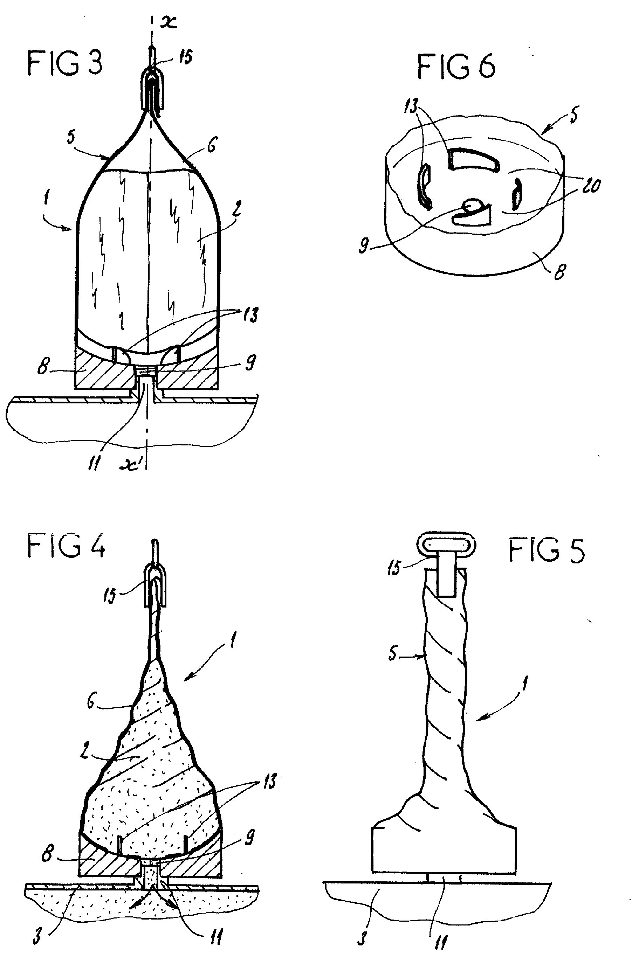

L'opérateur referme l'extrémité d'introduction 7 de la poche 5 en la repliant sur elle-même comme cela est illustré aux figures 2 et 3. L'opérateur place alors à cheval sur le bord replié de la poche une clef 15 formant des moyens pour enrouler le corps de la poche sur lui-même. La clef 15 est de préférence placée sensiblement au milieu de ce rebord replié de la poche.

A partir de cette configuration initiale telle qu'illustrée à la figure 3, l'opérateur tourne la clef 15 dans l'un ou l'autre des sens indiqués par la flèche F1 pour enrouler le corps 6 sur lui-même autour ou selon l'axe longitudinal X-X'. Cet enroulement entraîne un vrillage du corps souple 6 et une réduction du volume interne du corps 6 de sorte que le sachet 2 est poussé contre les dents 13 qui le perforent comme cela est illustré à la figure 4. Ainsi, la résine peut alors s'écouler du sachet et être expulsée par l'orifice d'éjection 9 dans la boîte de jonction 3. L'opérateur poursuit l'enroulement du corps 3 jusqu'au vrillage complet de la poche d'injection 5 comme cela est illustré à la figure 5 pour expulser toute la résine contenue dans le sachet 2.

Afin de permettre cet écoulement complet, de manière préférée les dents 13 sont espacées pour aménager au moins un, voire plusieurs, passages 20 d'écoulement de la résine vers l'orifice d'éjection 9. Dans le même sens, la paroi interne 12 de la tête d'injection 8 converge vers l'orifice 9 et, selon l'exemple illustré, cette paroi présente une forme de calotte sphérique d'axe X-X'. De même, de manière préférée, les moyens de perforation 13 sont aménagés de manière que la partie découpée du sachet reste, par au moins un bord de liaison, liée à l'ensemble du sachet afin d'éviter une injection de particules du sachet dans la boîte de raccordement 3.

Selon l'exemple illustré, il doit être noté que les moyens de perforation 13 sont formés par des dents qui sont disposées de façon à assurer une bonne perforation du sachet quelque soit le sens d'enroulement de la poche souple. A cet effet, comme cela ressort de la figure 6, les moyens de perforation comprennent quatre dents de loup 13 dont deux sont orientées dans un sens et deux autres dans un sens contraire.

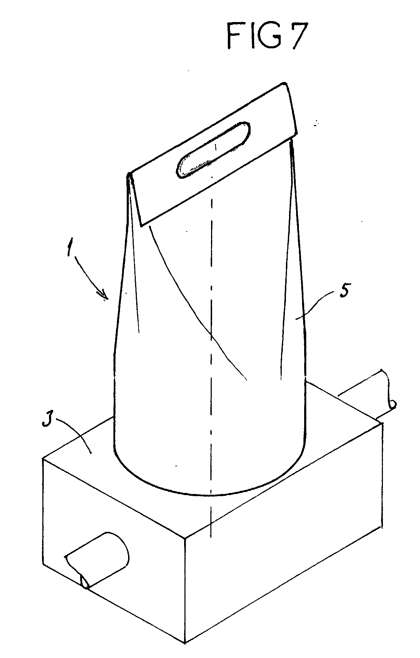

Par ailleurs, selon l'exemple illustré, les moyens d'enroulement de la poche sur elle-même sont constitués par une clef amovible 15. Toutefois, les moyens d'enroulement pourraient être directement intégrés à la poche d'injection 5 au niveau ou à proximité de l'extrémité d'introduction 7 du corps 6. Ainsi, la figure 7 illustre un exemple de réalisation selon lequel les moyens d'enroulement sont constitués par une poignée aménagée dans la partie supérieure du corps souple 5.

Selon les exemples de réalisation de l'invention, illustrés aux figures 1 à 7 et décrits ci-dessus, les moyens de perforation 13 comprennent des dents répartis à la périphérie de l'orifice d'éjection 9. Toutefois, selon l'invention, les moyens de perforation peuvent être réalisés sous une toute autre forme adaptée à leur fonction d'aménagement, dans une paroi ou l'enveloppe d'un sachet, d'au moins une ouverture pour l'écoulement du produit à injecter.

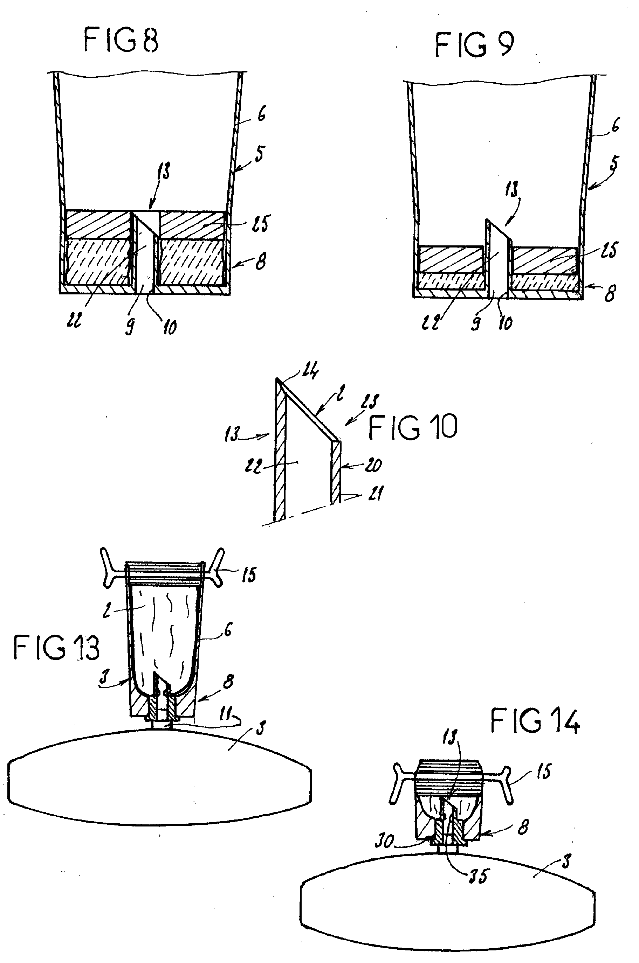

Ainsi, les figures 8 à 10 illustrent une autre forme de réalisation d'un dispositif d'injection conforme à l'invention selon laquelle les moyens de perforations 13 sont réalisés sous la forme d'une canule 20 qui comporte un corps tubulaire 21 définissant un canal d'éjection 22 disposé dans le prolongement de l'orifice d'éjection 9 de la tête d'injection 8. La canule 20 comprend en outre une extrémité de perforation 23 biseautée. Selon l'exemple illustré, l'extrémité de perforation 23 présente un chanfrein 24 s'étendant à partir de la face extérieure du corps 20 et convergeant vers le canal d'éjection 22. Bien entendu, le chanfrein pourrait également converger vers l'extrémité de perforation de la canule.

Selon l'exemple illustré, la canule 20 est fixée sur la tête d'injection 8 dans le prolongement de l'orifice d'éjection 9 et la paroi interne, de la tête d'injection 8 orientée vers l'intérieur de la poche 5, est définie par un plateau mobile 25 entre une position haute, plus particulièrement illustrée à la figure 8 et une position basse représentée à la figure 9. Ainsi, en position haute du plateau 25, l'extrémité de perforation de la canule se trouve escamotée en position de rétraction, tandis qu'en position basse, l'extrémité de perforation de la canule se trouve en saillie à l'intérieur de la poche 5, dans une position d'extension ou dite de perforation. La tête d'injection 8 comprend alors également des moyens élastiquement déformables, interposés entre le plateau 25 et la tête 8, de manière à asservir le plateau en position haute telle qu'illustrée à la figure 8. Cette forme de réalisation de la tête d'injection 8 présente l'avantage de réduire les risques de blessure d'un utilisateur du dispositif d'injection conforme à l'invention et garantit que le sachet du produit à injecter, placé à l'intérieur de la poche 5, ne sera perforé qu'au moment où une pression sera exercée sur ce dernier, de manière à repousser le plateau 25 jusqu'à perforer l'enveloppe du sachet.

Selon les exemples illustrés décrits précédemment, les moyens de perforation 13 sont solidaires de la tête d'injection en étant soit fixes, soit mobiles, par rapport à la paroi de la tête définissant le fond de la poche 5, de manière à pouvoir passer d'un état escamoté à un état d'extension ou de perforation. Toutefois, conformément à l'invention, les moyens de perforation 13 pourraient être indépendants de la tête d'injection 8.

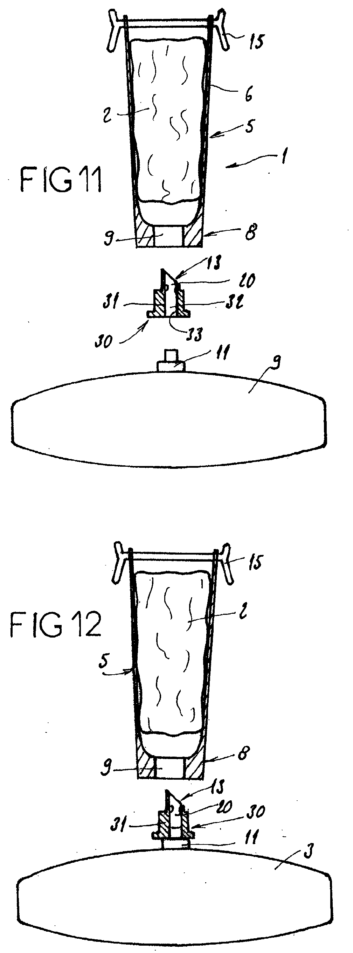

Ainsi, les figures 11 à 14 illustrent une forme de réalisation du dispositif conforme à l'invention selon laquelle les moyens de perforation sont réalisés sous la forme d'un ensemble 30 indépendant de la tête d'injection 8.

Selon l'exemple illustré, les moyens de perforation 13 comprennent alors un corps 31, destiné à venir s'insérer dans l'orifice d'éjection 9 de la tête 8. Le corps 31 comprend alors un alésage central formant un canal d'éjection 32 qui est équipé, à une extrémité, de moyens 33 de fixation sur la valve 11 de la boîte 3. Le canal 32 se prolonge, à l'opposé de son extrémité de raccordement à la valve 11, par une canule 20 telle que décrite en relation avec les figures 8 à 10.

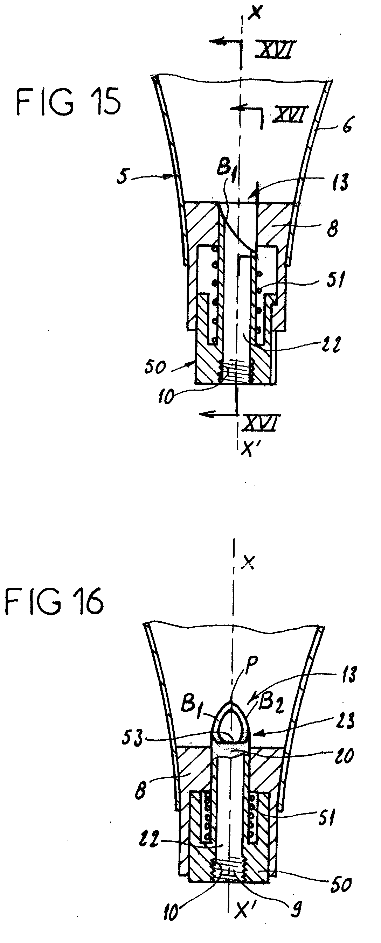

La mise en oeuvre du dispositif comprenant alors, d'une part, la poche d'injection 5 avec son corps souple 6 et sa tête d'injection 8, et d'autre part, des moyens de perforation indépendants 30, s'effectue de la façon suivante. Tout d'abord, les moyens de perforation 30 sont adaptés sur la valve 11 de la boîte 3. Ensuite, le sachet 2 de produit à injecter est placé à l'intérieur de la poche 5. Le corps 6 est alors enroulé sur lui-même au moyen de la clef 15 qui est alors animée d'un mouvement de rotation d'axe sensiblement perpendiculaire à l'axe longitudinal du corps 5 jusqu'à amener le sachet 2 en appui contre la paroi de fond de la poche définie par la paroi interne de la tête d'injection 8. Dans cet état plus particulièrement illustré à la figure 12, le sachet se trouve donc comprimé à l'intérieur de la poche 5 et son enveloppe fait obstacle à l'écoulement, par l'orifice d'éjection 9, du produit contenu dans le sachet. La tête d'injection 8 est alors engagée sur le corps des moyens de perforation, de manière à perforer l'enveloppe du sachet 8 au moyen de la canule 20. Il doit être noté qu'afin d'assurer une parfaite efficacité de la canule, la face interne de la tête d'injection définit autour de l'orifice d'éjection 9, un plateau plan de sorte que l'enveloppe du sachet 2 se trouve tendue selon un plan et se présente, comme le montre la figure 13, sensiblement perpendiculairement à l'extrémité de perforation 23 de la canule 20. Lorsque le corps des moyens de perforation est complètement engagé dans l'orifice 9, la paroi du sachet est perforée et l'opérateur enroule la poche 5 sur elle-même comme illustré à la figure 14, de manière à injecter le contenu du sachet dans la boîte 3. Afin de favoriser le meilleur écoulement possible du contenu du sachet 2, la canule 20 présente, à sa base, des orifices 35.

Lorsque le sachet est complètement vidé, la tête d'injection est retirée sur les moyens de perforation 30 et le corps 5 est complètement déroulé afin de permettre une extraction du sachet 8 et l'introduction d'un nouveau sachet plein dont le contenu est injecté dans la boîte 3 comme cela a été expliqué précédemment.

Les figures 15 et 16 illustrent une autre forme de réalisation du dispositif d'injection selon laquelle la canule 20 est portée par un équipage 50 mobile dans la tête 8, entre une position escamotée telle que représentée à la figure 15, et une position de perforation illustrée à la figure 16. L'équipage 50 est alors asservi en position escamotée, ou de rétraction de la canule 20, par un ressort 51 interposé entre l'équipage 50 et la tête 8.

Par ailleurs, selon la forme de réalisation illustrée aux figures 15 et 16, l'extrémité de perforation de la canule est définie par un biseau principal B₁ , tel qu'illustré à la figure 16, complété par deux biseaux latérales B₂ de manière à définir une pointe P. Le chanfrein de l'extrémité de perforation est alors réalisé de manière à présenter, à l'opposé de la pointe P, un méplat 53 s'étendant selon un plan sensiblement perpendiculaire à l'axe X-X' de la canule 20. Le méplat 53 permet, de manière fort avantageuse, de définir, au niveau de l'extrémité de perforation, une zone non coupante de manière que la partie du sachet découpée par la canule reste liée au reste du sachet.

L'invention n'est pas limitée aux exemples décrits ci-dessus et diverses modifications peuvent y être apportées sans sortir de son cadre.

## Revendications

1. Dispositif d'injection d'un produit fluide ou pâteux du type comprenant une poche d'injection qui comprend un corps souple creux (6) équipé d'une tête d'injection (8) pourvue d'au moins un orifice (9) d'éjection du produit à injecter, le dispositif comprenant en outre des moyens (13, 30) de perforation d'une membrane faisant obstacle à un écoulement du produit à injecter par l'orifice d'éjection,
**caractérisé en ce que** les moyens de perforation (13) comprennent au moins une canule (20) comportant un corps tubulaire définissant un canal (22) d'éjection du produit à injecter et une extrémité de perforation (23).

2. Dispositif d'injection selon la revendication 1, **caractérisé en ce que** le corps souple (6) est formé par un sachet étanche contenant le produit et étant équipé de la tête d'injection.

3. Dispositif d'injection selon la revendication 1, **caractérisé en ce que** le corps (6) de la poche d'injection présente, une forme allongée et comporte, à une extrémité, la tête d'injection, et à l'extrémité opposée, une ouverture pour l'introduction d'un sachet contenant le produit à injecter.

4. Dispositif d'injection selon la revendication 3, **caractérisé en ce que** le corps (6) de la poche présente une forme sensiblement cylindrique de révolution.

5. Dispositif d'injection selon la revendication 3 ou 4, **caractérisé en ce que** la paroi interne (12) de la tête d'injection (8) converge vers l'orifice d'éjection.

6. Dispositif d'injection selon la revendication 5, **caractérisé en ce que** la paroi interne (12) de la tête d'injection (8) présente la forme d'une calotte sphérique.

7. Dispositif d'injection selon la revendication 3, **caractérisé en ce que** la paroi interne de la tête d'injection définit un plateau, autour de l'orifice d'injection.

8. Dispositif d'injection selon les revendications 1 à 7, **caractérisé en ce que** le bord de l'extrémité de perforation de la canule (20) présente un chanfrein (25) s'étendant à partir de la face extérieure du corps de la canule et convergeant vers le canal (22) ou l'extrémité de perforation (23) de la canule (20).

9. Dispositif d'injection selon les revendications 1 à 8, **caractérisé en ce que** l'extrémité de perforation (23) est biseautée et présente une pointe (P) et, à l'opposé de la pointe (P), un méplat (53) définissant une zone non coupante.

10. Dispositif d'injection selon l'une des revendications 1 à 9, **caractérisé en ce que** les moyens de perforation (13) sont solidaires de la tête d'injection (8).

11. Dispositif d'injection selon la revendication 9, **caractérisé en ce que** les moyens de perforation (13) sont mobiles par rapport à la paroi de la tête d'injection (8) orientée vers l'intérieur de la poche, entre une position de perforation et une position de rétraction.

12. Dispositif d'injection selon la revendication 9 ou 10, **caractérisé en ce que** les moyens de perforation (13) sont disposés en partie au moins autour de l'orifice d'éjection (9) et définissent au moins un passage (20) d'écoulement de produit à injecter.

13. Dispositif d'injection selon l'une des revendications 1 à 12, **caractérisé en ce que** les moyens de perforation (13) sont adaptés pour découper une ouverture dans le sachet (2) contenant le produit à injecter tout en laissant subsister au moins un bras de liaison entre la partie découpée et le reste du sachet (2).

14. Dispositif d'injection selon l'une des revendications 1 à 13, **caractérisé en ce que** la tête d'injection (8) comprend des moyens (9) de fixation sur un réceptacle du produit à injecter.

15. Dispositif d'injection selon l'une des revendications 1 à 8, **caractérisé en ce que** les moyens de perforation (13, 30) sont indépendants de la tête d'injection.

16. Dispositif selon la revendication 14, **caractérisé en ce que** les moyens de perforation comprennent un corps tubulaire (31) qui définit un canal d'éjection et qui est destiné à venir s'insérer dans l'orifice d'éjection (9) de la tête d'injection (8).

17. Dispositif d'injection selon la revendication 15 ou 16, **caractérisé en ce que** les moyens de perforation (30) comprennent des moyens de fixation sur un réceptacle du produit à injecter.

18. Dispositif d'injection selon l'une des revendications 1 à 16, **caractérisé en ce qu'**il comprend des moyens (15) pour enrouler le corps de la poche sur lui-même.

19. Dispositif d'injection selon la revendication 17, **caractérisé en ce que** les moyens d'enroulement sont constitués par une clef amovible (15).

20. Dispositif d'injection selon la revendication 17, **caractérisé en ce que** les moyens d'enroulement (15) sont intégrés dans le corps souple au niveau de l'ouverture d'introduction.

21. Dispositif d'injection selon l'une des revendications 1 à 19, **caractérisé en ce que** le corps souple (6) et la tête d'injection (8) forment ensemble monobloc.

22. Dispositif d'injection selon l'une des revendications 1 à 21, **caractérisé en ce que** le corps souple (6) et la tête d'injection (8) sont fabriqués d'une seule pièce en matière plastique.

23. Dispositif d'injection selon l'une des revendications 1 à 22, **caractérisé en ce que** les moyens de perforation (13) sont adaptés pour perforer le sachet indépendamment du sens d'enroulement du corps de la poche.

24. Procédé d'injection dans un réceptacle (3) d'un produit fluide ou pâteux conditionné dans un sachet (2) du type consistant notamment à :
- mettre en oeuvre un dispositif d'injection (1) comprenant :
• une poche d'injection (5) qui comprend un corps creux souple (6) ouvert à une extrémité pour l'introduction du sachet (2) et fermé à l'extrémité opposée par une tête d'injection (8) pourvue d'au moins un orifice d'éjection (9),
• et des moyens (15) pour enrouler sur lui-même le corps souple de la poche,
- placer l'orifice d'éjection (9) en relation avec le réceptacle (3),
- disposer le sachet (2) dans le corps souple,
- enrouler le corps souple (6) sur lui-même pour éjecter, par l'orifice d'éjection, le contenu du sachet dans le réceptacle,
**caractérisé en ce qu'**il consiste à :
- mettre en oeuvre un dispositif d'injection 1 comprenant des moyens de perforation, lesdits moyens de perforation comprenant au moins une canule comportant un corps tubulaire définissant un canal d'éjection du produit à injecter et une extrémité de perforation,
- perforer le sachet, placé dans le dispositif d'injection, avec les moyens de perforation avant de procéder à l'injection du contenu du sachet dans le réceptacle (3).

25. Procédé d'injection selon la revendication 24, **caractérisé en ce qu'**il consiste à comprimer le sachet avant de le perforer.

26. Procédé d'injection selon la revendication 24 ou 25, **caractérisé en ce qu'**il consiste à enrouler le corps sur lui-même autour d'un axe longitudinal (X-X').
